# EUROPÄISCHE PATENTSCHRIFT

(11) **EP 0 426 891 B1**
(45) Veröffentlichungstag und Bekanntmachung des Hinweises auf die Patenterteilung: **02.02.1994**
(21) Anmeldenummer: 89120608.8
(22) Anmeldetag: 07.11.1989
(51) Int. Cl.: A62C 2/06, E04B 1/94, B32B 3/10

(54) **Brandschutzeinrichtung auf Natriumsilikatbasis**
Fireproof plate on the basis of sodium silicate
Plaque ignifuge à base de silicate de sodium

(43) Veröffentlichungstag der Anmeldung: 15.05.1991
(73) Patentinhaber: ROLF KUHN GMBH, D-82324 Tutzing (DE)
(72) Erfinder: Kuhn, Harald, D-8132 Tutzing (DE)
(74) Vertreter: Herrmann-Trentepohl, Werner, Dipl.-Ing.

(56) Entgegenhaltungen:
- EP-A- 0 036 616
- EP-A- 0 151 328
- DE-A- 2 529 911
- DE-B- 1 559 488
- US-A- 3 364 097
- US-A- 3 605 370

## Beschreibung

Die Erfindung betrifft eine hermetisch und dauerhaft gegen externe Einflüsse geschützte Brandschutzeinrichtung, insbesondere eine Brandschutzplatte, auf Natriumsilikat-Basis. Aus dem Stand der Technik ist bekannt, wasserhaltige Platten aus anorganischen Materialien zum Brandschutz einzusetzen. Ein vielfach verwandtes Material hierfür ist wasserhaltiges Natriumsilikat. Derartige Brandschutzplatten sind selbst nicht entflammbar, sondern schäumen unter Hitzeeinwirkung auf und bilden eine feinporige, stabile, schaumartige Masse. Diese Masse weist sehr gute brandschutztechnische Eigenschaften auf und behindert insbesondere den Durchtritt von Hitze, Flammen, Gasen und Rauch. Der Schaum bildet ferner eine Abdichtmasse, die in der Lage ist, Spalten, Risse, Fugen, Öffnungen oder dgl. zuverlässig abzudichten und auf diese Weise die Luftzufuhr zu einem Brandherd zu unterbinden.

Ein wesentliches Einsatzgebiet stellen Feuerschutztüren dar, bei denen produktimmanent ein Spalt zwischen Zarge und Türblatt auftritt. Werden zum Abdichten einer Spalte Brandschutzplatten verwandt, schäumen diese im Brandfall auf, und dichten die Tür mit dem entstehenden feinporigen, sehr festen Schaum gegen eine Brandübertragung in benachbarte Räume ab. Hierdurch wird Zugleich das Durchtreten von Gasen und Rauch durch die so abgedichteten Öffnungen verhindert.

Das für aufschäumende Dämmschichtbildner häufig verwandte Natriumsilikat enthält einen Wasseranteil von etwa 75 %. Dieser Wasseranteil ist verantwortlich für das Aufschäumen unter Hitzeeinwirkung. Aus diesem Grunde muß gewährleistet werden, daß der Wasseranteil über die Gebrauchsdauer der Brandschutzplatte in etwa konstant bleibt. Da bei Einwirkung von hoher Luftfeuchtigkeit oder bei direktem Kontakt mit Wasser Natriumsilikat zur Aufnahme von weiterem Wasser tendiert, ist eine wirkungsvolle und dauerhafte Abschließung des Natriumsilikates gegen die Umgebung erforderlich. Hierzu reichen aber die werkseitigen Oberflächen aus Epoxidharz oder ähnlichen Materialien, wie beispielsweise aus EP-A-0 151 328 bekannt sind, in der Regel nicht aus. So besteht bei der Verarbeitung der Platten und insbesondere bei einer Konfektionierung in Streifen oder andere Zuschnitte die Gefahr, daß diese Oberfläche verletzt wird und ihre Schutzwirkung verliert. In diesem Fall besteht die Gefahr, daß sich das Natriumsilikat aus der umgebenden Atmosphäre Feuchtigkeit aufnimmt und flüssig wird und damit seine brandschutztechnisch relevanten Eigenschaften verliert.

Neben der Luftfeuchtigkeit wirken sich auch andere atmosphärische Bestandteile, insbesondere das in der Atmosphäre enthaltene Kohlendioxid, nachteilig auf die Beständigkeit der Brandschutzplatten aus. Dies gilt insbesondere für die Alterungsbeständigkeit und damit deren Langzeitfunktionsfähigkeit. Von Brandschutzplatten wird im allgemeinen verlangt, daß sie ihre Schutzfunktion über einen Zeitraum von wenigstens 20 Jahren erfüllen.

Aus den genannten Gründen müssen Brandschutzplatten durch geeignete Verpackungen gegen externe Einflüsse geschützt werden. Ohne einen solchen Schutz wird eine bauaufsichtliche Zulassung durch die oberste Baubehörde nicht erteilt.

Der Schutz der Natriumsilikat-Brandschutzplatten muß unmittelbar nach der Herstellung einsetzen und über den Transport, den Zuschnitt, den Einbau über deren gesamte Funktionsdauer hin andauern. Er muß sowohl mechanische als auch atmosphärische Einflüsse abwehren.

Bislang wurden Brandschutzplatten in geeignete Folien, z.B. 3-fache Verbundfolien auf Aluminiumbasis, eingesiegelt. Diese Folien weisen aber den Nachteil auf, daß sie leicht mechanisch beschädigt werden und eines weiteren Schutzes gegen mechanische Beschädigung bedürfen. Hinzu kommt, daß Brandschutzplatten in häufig relativ schmalen Streifen oder Profilen eingesetzt werden, die eine gewisse Stabilität aufweisen müssen. Die Brandschutzplatten sind allerdings aufgrund ihrer relativ dünnen Materialstärke von in der Regel 2mm und aufgrund ihres relativ niedrigen Flächengewichtes recht instabil und zerbrechlich, insbesondere bei Temperaturen unter 20°C. Verbundfolien sind naturgemäß nicht geeignet, die benötigte zusätzliche Stabilität zu verleihen.

Werden derartig geschützte Brandschutzplatten in Bauteilen verwandt, in denen eine zusätzliche Stabilisierung durch direktes Aufbringen auf ein tragendes Teil, etwa auf Zarge/Türfalz einer Tür, nicht gegeben ist, ist ihre einwandfreie Funktion gefährdet. So muß z. B. bei einer Verwendung solcher Platten als Lamellen bei Lüftungsgittern, die im Brandfall zuschäumen, eine Einsiegelung gewählt werden, die eine stabilisierende Wirkung entfaltet, wobei aber die eigentliche Schutzfunktion im Brandfall nicht beeinträchtigt werden darf.

Eine andere Möglichkeit besteht gemäß DE 25 29 911 A1 darin, in den zu schützenden Bereich, z. B. einen Luftkanal, einen gitterartigen Rahmen einzubringen, der Einsteckschlitze für die in Folienbeutel eingeschlossenen Brandschutzplatten aufweist. Ein solcher Gitterrahmen muß aber in seiner Form und seinen Abmessungen an den jeweiligen Einsatzort angepaßt sein und ist daher nicht universell zu verwenden. Im Oberbegriff des Ansprüchs 1 wird von einem solchen Stand der Technik ausgegangen. Um dieser Stabilitätsanforderung gerecht zu werden, wurden Brandschutzplatten oder -Streifen in extrudierte Hart-PVC-Profile eingeschoben. Wegen der oben beschriebenen unzureichenden Schutzwirkung der werksseitig aufgebrachten Epoxydharzbeschichtung besteht hierbei die Notwendigkeit, die Schnittenden der PVC-Profile aufwendig und kostspielig zu versiegeln.

Hinzu kommt, daß die Verwendung von Polyvenylchlorid aus mehreren Gründen problematisch ist. Zum einen ist die Verwendung von Polyvenylchlorid aus ökologischen Gründen sehr bedenklich; hierdurch werden die ökologisch neutralen Eigenschaften der Brandschutzplatte selbst nicht nur aufgehoben, sondern sogar ins Gegenteil verkehrt. Zum anderen zersetzt sich Polyvenylchlorid im Brandfall unter Freisetzung von Chlorwasserstoffgas - gasförmiger Salzsäure - die neben ihren toxischen Auswirkungen starke Korrosionsschäden verursachen kann. Auch eine Reduzierung des PVC-Anteils kann die grundsätzlichen Probleme dieses Materials, das auch zunehmend in die öffentliche Diskussion gerät, nicht zufriedenstellend lösen.

Es wurde auch die Verwendung einer Verpackung in Form von Profilen aus Metall/Leichtmetall mit eingearbeiteten Sollbruchstellen vorgeschlagen, die die oben dargestellten Anforderungen an einen wirksamen Schutz der Brandschutzplatten sehr gut erfüllen, jedoch bei einer Reihe von Einsatzgebieten Nachteile aufweisen.

Es ist auch denkbar, das oben geschilderte Stabilitätsproblem durch die Verwendung von doppelseitig klebenden Folien (Selbstklebefolien) auf dem betreffenden Bauteil zu umgehen. Auf diese Weise könnten Brandschutzplatten in den Zargen/Falzbereich von Feuerschutztüren eingeklebt werden. Diese Form der Anbringung scheitert aber an den Auflagen der Bauaufsicht, die bei Feuerschutztüren eine Lebensdauer von 20 Jahren zugrundelegt und für solchermaßen verwandte Selbstklebefolien den Nachweis der Funktionstüchtigkeit von ebenfalls 20 Jahren fordert. Da dieser Nachweis durch Extrapolation kurzfristig ermittelter Prüfergebnisse von Materialprüfungen mit den bekannten Methoden nicht erbracht werden kann - zum Nachweis ist im Grunde genommen ein 20-jähriger Test erforderlich - wird von der Bauaufsicht nach wie vor eine mechanische Befestigung der Brandschutzplatten bzw. -Streifen in Feuerschutztüren verlangt.

Brandschutzplatten bzw. -Streifen, die auf anderer als Natriumsilikat-Basis aufbauen, bedürfen in der Regel keines Schutzes gegen externe Einflüsse und können daher leicht mit Befestigungen angebracht werden, die durch das Material hindurch greifen, also beispielsweise durch das Brandschutzmaterial hindurch mit dem Untergrund verbunden werden. Die Möglichkeit steht aber für Natriumsilikat-Brandschutzplatten wegen der oben beschriebenen Empfindlichkeit gegenüber atmosphärischen Einflüssen nicht offen.

Die bisher praktizierte Herstellung der Natriumsilikatbrandschutzmaterialien in Plattenform bedingt auch einen weiteren Nachteil, dergestalt, daß eine Verwendung "an der Baustelle von der Rolle", wie dies bei vielen alternativen Materialien möglich ist, nicht angeboten werden kann. Hierdurch besteht ein erheblicher Wettbewerbsnachteil gegenüber entsprechend einsetzbaren Brandschutzvorrichtungen, die problemlos und ohne Einschränkung auch in geringen Losgrößen bis unmittelbar an die Baustelle transportiert, ständig mitgeführt und vor Ort auf Maße zugeschnitten und verarbeitet werden können. Diese aus dem Stand der Technik bekannten Nachteile konnten bisher nicht überwunden werden, weshalb bisher nur auf wenigen Gebieten außerhalb des Bereiches der Feuerschutztüren möglich war, Brandschutzplatten auf der Basis von ökologisch unbedenklichen Natriumsilikat kostengünstig und wettbewerbsfähig einzusetzen.

Der Erfindung liegt daher die Aufgabe zugunde, Brandschutzeinrichtungen, insbesondere eine Brandschutzplatte auf Natriumsilikat-Basis zu schaffen, die wirtschaftlich in ihrer Herstellung ist, dauerhaft und hermetisch gegen die oben geschilderten externen Einflüsse geschützt ist und damit den Forderungen der Bauaufsicht entspricht, wobei der Schutz die brandschutztechnisch relevanten Eigenschaften des Brandschutzmaterials, vor allem das Aufschäumverhalten, nicht einschränkt, sich ökologisch zumindest neutral verhält und bei Einbau in Lüftungsgitter oder ähnliche Bauteile hinreichend stabil ist, und dabei problemlos transportiert, an die Baustelle mitgeführt und vor Ort verarbeitet werden kann.

Die Aufgabe wird mit einer Brandschutzeinrichtung der eingangs geschilderten Art gelöst, die eine Vielzahl von in eine allseitig umschließende, dichte Verpackung in Form einer direkt aufgebrachten, eng anliegenden Folie eingesiegelten Natriumsilikatplatten aufweist, die in ein plattenförmiges Hohlprofil eingeschoben sind. Vorzugsweise liegen die einzelnen Natriumsilikatplatten in Form von Streifen vor, die beispielsweise eine Länge von 200 bis 500mm, vorzugsweise etwa 300mm, eine Breite von 5 bis 50mm und eine Stärke von 2mm aufweisen.

Die erfindungsgemäß geschützten Natriumsilikatplatten oder - Streifen sind vorzugsweise in übliche Kunststoffolien eingeschweißt, die an gegenüberliegenden Enden Laschen aus verschweißter Folie aufweisen. Diese Laschen werden beim Einschieben der einzelnen Platten oder Streifen in das Hohlprofil umgeschlagen, wodurch die Platten bzw. Streifen in dem Hohlprofil festgehalten werden.

Das Hohlprofil, in das die eingesiegelten Platten oder Streifen eingeschoben werden, besteht vorzugsweise aus einem Kunststoff. Dieser Kunststoff darf das Aufschäumverhalten des Brandschutzmaterials nicht einschränken und sollte deshalb einen Schmelz- und Erweichungspunkt unterhalb der Schäumungstemperatur aufweisen. Vorzugsweise besteht der Kunststoff aus ABS mit einem Schmelzpunkt von etwa 96°C. Es können aber auch andere Materialien für das Hohlprofil verwandt werden, sofern sie die geforderten Kriterien an Stabilität und Verhalten im Brandfall erfüllen und sich ökologisch zumindest neutral verhalten.

Gleichzeitig sollte das Hohlprofil eine hinreichende Flexibilität aufweisen, damit es in mit Natriumsilikatplatten gefüllten Zustand gewickelt oder gerollt werden kann.

Die Erfindung betrifft weiterhin ein Verpackungssystem zum hermetischen und dauerhaften Schutz von Brandschutzplatten auf Natriumsilikat-Basis, das aus einer inneren Folie für die allseitig umschließende dichte Einsiegelung einzelner Natriumsilikatplatten und einem äußeren Hohlprofil besteht.

Die Vorteile der erfindungsgemäßen Brandschutzeinrichtung bzw. des dafür bestimmten Verpackungssystemes ergeben sich aus der Kombination der Einsiegelungs- und Verpackungsart. Dabei ist die Einsiegelung in die enganliegende Folie mit relativ einfachen technischen Vorrichtungen wirtschaftlich sehr günstig durchzuführen. Sie garantiert zugleich den hermetischen und dauerhaften Schutz gegen externe Einflüsse.

Die Verwendung einer Vielzahl von Brandschutzplatten oder - Streifen in den Hohlprofilen stellt zugleich sicher, daß selbst bei Beschädigung einzelner Platten oder Streifen nicht die gesamte Brandschutzeinrichtung ihre Funktionsfähigkeit verliert. Durch die "innere" Folieneinsiegelung ergibt sich zugleich eine Endenversiegelung an den Querschnittkanten der Streifen in Form einer flexiblen, umlegbaren Lasche, die von verschweißter Folie gebildet wird. Damit entspricht die Folienverpackung auch Anforderungen der Bauaufsicht. Die Lasche wird beim Einschieben des Streifens in das Hohlprofil umgelegt und klemmt die einzelnen Natriumsilikatstreifen im Inneren des Profils fest. Hierdurch wird eine zusätzliche Fixierung der Streifen über einen zusätzlichen Arbeitsgang und einen Kleber oder auf eine andere Weise überflüssig.

Das Hohlprofil, in das die bereits geschützten Streifen eingelegt werden, kann den jeweiligen Anforderungen entsprechend den Auflagen der Bauaufsicht angepaßt werden und bewirkt insbesondere den notwendigen Schutz der Natriumsilikatmasse gegen mechanische Schädigung.

Die Herstellung des Hohlprofils geschieht auf übliche Art und Weise und ist wirtschaftlich günstig möglich. Die Verwendung eines ökologisch neutralen Werkstoffes, beispielsweise ABS, erhält die umwelttechnisch positiven Eigenschaften der Brandschutzplatten. ABS behindert auch die brandschutztechnisch erwünschte Verhaltensweise der Platte nicht, da es einen Schmelzpunkt von etwa 96°C aufweist und somit bei der Schäumtemperatur der Natriumsilikatplatten, die bei etwa 100°C liegt, erweicht und der Schäumung keinen größeren Widerstand entgegensetzt. Andererseits gibt dieser Kunststoff die erwünschte Stabilität für den Einsatz in bestimmte Bauteile, beispielsweise Lüftungsgitter.

Die Herstellung der Profile erfolgt auf übliche Art und Weise und ist wirtschaftlich äußerst günstig möglich. Wegen der Einsiegelung der Natriumsilikatstreifen in eine Folie entfällt zudem die Notwendigkeit, das Hohlprofil an den Endkanten nochmals hermetisch und dauerhaft zu verschließen, was einen zusätzlichen Arbeitsgang und zusätzliche Kosten erspart.

Weiterhin von Vorteil ist, daß die erfindungsgemäß verpackte Brandschutzeinrichtung eine Anbringung auf dem jeweiligen Untergrund auch durch das Brandschutzmaterial hindurch erlaubt, da der doppelte Schutzeffekt der beiden erfindungsgemäßen Einsiegelungen ausreicht, die Schutzfunktion auch im Falle einer mechanischen Befestigung durch Anheften, durch Schrauben und Annieten zu gewährleisten. Zudem wird bei einer solchen Befestigung nur ein geringer Teil der geschützten Natriumsilikatplatten oder -Streifen verletzt, was die Funktionsfähigkeit der Brandschutzeinrichtung nicht grundsätzlich in Frage stellt.

Die Herstellung relativ kurzer Streifen in Folieneinsiegelung ermöglicht ein leichtes Einschieben der Stücke in das umgebende Profil. Zudem wird durch die gegeneinander beweglichen einzelnen Platten oder Streifen dem Gesamtprofil mit den eingeschobenen Streifen eine hohe Flexibilität verliehen, so daß ein Einrollen in Längen von jeweils 5 oder 10 m Länge möglich ist. Dies erlaubt es, die Streifen trotz ihrer Länge leicht an die Baustelle zu transportieren oder mitzuführen und vor Ort "von der Rolle" zu verarbeiten.

Wird es im Laufe der Verarbeitung notwendig, die Hohlprofile abzulängen, so können die an den Schnittenden freiliegenden Natriumsilikatplatten oder -Streifen schnell und problemlos durch Überkleben erneut versiegelt und wieder in das Hohlprofil eingeschoben werden. Eine Verwendung der erfindungsgemäßen Brandschutzeinrichtung gemäß den Auflagen der Bauaufsicht ist somit in jedem Fall gegeben.

Die Erfindung wird durch die beiliegenden Abbildungen näher erleutert. Von diesen zeigen
- Fig. 1:: eine perspektivische Ansicht eines Natriumsilikatstreifens in Folieneinsiegelung;
- Fig. 2:: eine perspektivische Darstellung eines erfindungsgemäß einzusetzenden Hohlprofils; und
- Fig. 3:: die Art der Einfügung eines eingesiegelten Natriumsilikatstreifens in das Hohlprofil.

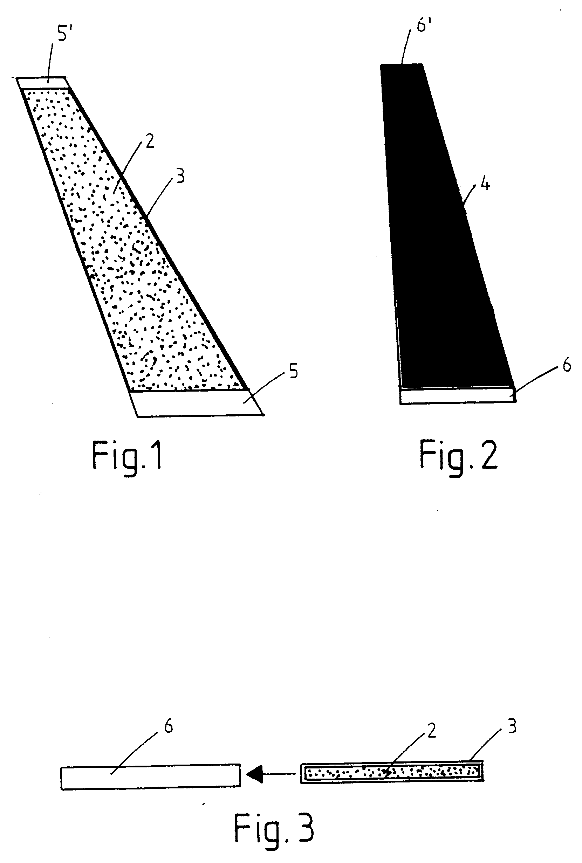

Fig. 1 zeigt eine Natriumsilikatplatte in Streifenform 2, die in eine enganliegende Folie 3 eingesiegelt ist. Die Folie 3 weist an ihren Enden überstehend und mit einander verschweiste Laschen 5,5' auf.

Vorzugsweise hat die streifenförmige Natriumsilikatplatte eine Länge von 200 bis 500mm und insbesondere von etwa 300mm. Die Breite beträgt nach Bedarf ca. 5 bis 50mm und die herstellungsbedingte Stärke ca. 2 (+/-0,3)mm.

Fig. 2 zeigt ein erfindungsgemäß zu verwendenes Hohlprofil 4, das zugleich die äußere Umhüllung der Brandschutzeinrichtung 1 darstellt. Die Enden 6,6' des Hohlprofils 4 sind offen und dienen der Einführung der Natriumsilikatstreifen oder -Platten. Die Hohlprofile sind zur Aufnahme einer Vielzahl von Natriumsilikatplatten oder Streifen bestimmt und weisen vorzugsweise eine Länge von bis zu 10m auf. Die Breite ist auf die Ausmaße der Natriumsilikatplatten abgestimmt und beträgt vorzugsweise 5 bis 50mm, je nach Einführungsweise der Natriumsilikatplatten. Die Dicke des Hohlprofils ist ebenfalls auf die Natriumsilikatplatten abgestimmt und beträgt vorzugsweise 3 bis 6mm.

Fig. 3 erläutert das Einschieben der in die Folie 3 eingeschweißten Natriumsilikatplatte 2 in das offene Ende 6 des Hohlprofils 4.

Es versteht sich, daß die eingesiegelten Natriumsilikatplatten oder -Streifen nicht nur in Form von einzeln eingesiegelten Streifen oder Platten in das Hohlprofil eingeschoben werden können, sondern auch in Form eines zusammenhängenden Streifens, indem die einzelnen Natriumsilikatplatten separat eingeschweißt und durch verschweißte Folienstücke voneinander getrennt sind. In diesem Fall liegen die Natriumsilikatplatten in Form eines flexiblen Plattenverbundes vor. Die einzelnen Segmente können an den verschweißten Stellen auseinandergeschnitten oder abgetrennt werden, wodurch sich die einzelnen Platten oder Streifen ergeben.

## Patentansprüche

1. Brandschutzeinrichtung auf Natriumsilikatbasis, bei der aufschäumende Natriumsilikatplatten (2) jeweils in eine allseitig umschließende, dichte Verpackung in Form einer Folie (3) eingesiegelt und in ein Hohlprofil eingeschoben sind, dadurch gekennzeichnet, daß zur Bildung von Brandschutzplatten mehrere Natriumsilikatplatten (2) jeweils in ein plattenförmiges Hohlprofil (4) eingeschoben sind und daß jede Silikatplatte in eine dicht aufgebrachte, eng anliegende Folie (3) eingesiegelt ist.

2. Brandschutzeinrichtung nach Anspruch 1, dadurch gekennzeichnet, daß die einzelnen Natriumsilikatplatten (2) in Streifenform vorliegen.

3. Brandschutzeinrichtung nach Anspruch 1 oder 2, dadurch gekennzeichnet, daß die Natriumsilikatplatten oder - streifen (2) an gegenüberliegenden Enden Laschen (5, 5') aus verschweißter Folie aufweisen, die die einzelnen Natriumsilikatplatten (2) im Hohlprofil festhalten.

4. Brandschutzeinrichtung nach einem der Ansprüche 1 bis 3, dadurch gekennzeichnet, daß das Hohlprofil (4) aus Kunststoff besteht.

5. Brandschutzeinrichtung nach Anspruch 4, dadurch gekennzeichnet, daß der Kunststoff einen Schmelzpunkt bzw. Erweichungspunkt unterhalb der Schäumungstemperatur des Natriumsilikates hat.

6. Brandschutzeinrichtung nach Anspruch 4 oder 5, dadurch gekennzeichnet, daß das Hohlprofil aus einem ökologisch neutralen Kunststoff besteht.

7. Brandschutzeinrichtung nach einem der Ansprüche 1 bis 6, dadurch gekennzeichnet, daß das Hohlprofil (4) flexibel ist.

8. Brandschutzeinrichtung nach einem der Ansprüche 1 bis 7, dadurch gekennzeichnet, daß die eingesiegelten Natriumsilikatplatten oder -streifen (2) eine Länge von 200 bis 500 mm, vorzugsweise etwa 300 mm, eine Breite von 5 bis 50 mm und eine Stärke von 3 bis 10 mm, vorzugsweise etwa 3,5 mm aufweisen.

9. Brandschutzeinrichtung nach einem der Ansprüche 1 bis 8, dadurch gekennzeichnet, daß es als Verpackungssystem mit einer inneren Folie (3) für die allseitig umschließende dichte Verpackung und Einsiegelung von Natriumsilikatplatten (2) und einem äußeren Hohlprofil (4), in das die innere Folie eingeschoben ist, ausgebildet ist.

## Claims

1. Fire protection means based on sodium silicate, in which foamed sodium-silicate panels (2) are sealed in an allround-enclosing, impervious package in the form of a film (3) and are pushed into a hollow profile,
**characterised in that**
for forming fire protection panels several sodium-silicate panels (2) are pushed into a panel-shaped hollow profile (4) and that each each slicate panel is sealed in a closely applied, snugly fitting film (3).

2. Fire protection means according to claim 1,
**characterised in that**
the individual sodium-silicate panels (2) are in strip form.

3. Fire protection means according to claim 1 or 2,
**characterised in that**
the sodium-silicate panels or strips (2) have at opposite ends tabs (5,5') of welded film, which hold the individual sodium-silicate panels (2) securely in the hollow profile.

4. Fire protection means according to one of claims 1 to 3,
**characterised in that**
the hollow profile (4) consists of plastic.

5. Fire protection means according to claim 4,
**characterised in that**
the plastic has a melting point or softening point below the foaming temperature of the sodium silicate.

6. Fire protection means according to claim 4 or 5,
**characterised in that**
the hollow profile consists of an ecologically neutral plastic.

7. Fire protection means according to one of claims 1 to 6,
**characterised in that**
the hollow profile (4) is flexible.

8. Fire protection means according to one of claims 1 to 7,
**characterised in that**
the sealed-in sodium-silicate plates or strips (2) have a length of 200 to 500 mm, preferably about 300 mm, a width of 5 to 50 mm and a thickness of 3 to 10 mm, preferably about 3.5 mm.

9. Fire protection means according to one of claims 1 to 8,
**characterised in that**
it is in the form of a package system with an inner film (3) for the allround-enclosing impervious packing and sealing-in of sodium-silicate panels (2) and an outer hollow profile (4), into which the inner film is pushed.

## Revendications

1. Dispositif de protection contre l'incendie à base de silicate de sodium, dans laquelle des plaques en silicate de sodium (2) moussantes sont scellées chacune dans un emballage étanche assurant un enveloppement de tous côtés, se présentant sous la forme d'une feuille (3), et introduites dans un profilé creux (4), **caracterisé en ce que**, pour former des plaques de protection contre l'incendie, plusieurs plaques en silicate de sodium (2) sont chacune introduites dans un profilé creux en forme de plaque (4), et que chaque plaque en silicate est scellée dans une feuille (3) plaquée et tendue.

2. Dispositif de protection contre l'incendie selon la revendication 1, **caracterisé en ce que** les differentes plaques en silicate de sodium (2) se présentent sous forme de bandes.

3. Dispositif de protection contre l'incendie selon la revendication 1 ou 2, **caracterisé en ce que** les plaques ou bandes en silicate de sodium (2) présentent, aux extremités opposés, des attaches (5,5') en feuille soudée, qui fixent les différentes plaques en silicate de sodium (2) dans le profilé creux.

4. Dispositif de protection contre l'incendie selon l'une des revendications 1 à 3, **caracterisé en ce que** le profilé creux (4) est en matière synthétique.

5. Dispositif de protection contre l'incendie selon la revendication 4, **characterisé en ce que** la matière synthétique présente un point de fusion, respectivement un point d'amollissement, inférieur à la température de moussage du silicate de sodium.

6. Dispositif de protection contre l'incendie selon la revendication 4 ou 5, **caracterisé en ce que** le profilé creux est en une matière synthétique écologiquement neutre.

7. Dispositif de protection contre l'incendie selon l'une des revendications 1 à 6, **caracterisé en ce que** le profilé creux (4) est flexible.

8. Dispositif de protection contre l'incendie selon l'une des revendications 1 à 7, **caracterisé en ce que** les plaques ou bandes (2) en silicate de sodium scellées ont une longueur de 200 à 500 mm, de préférence d'à peu près 300 mm, une largeur de 5 à 50 mm, et une épaisseur de 3 à 10 mm, de préférence d'à peu près 3,5 mm.

9. Dispositif de protection contre l'incendie selon l'une des revendications 1 à 8, **caracterisé en ce qu'** il est dévéloppé comme system d'emballage présentant une feuille intérieure (3) pour l'emballage étanche assurant un enveloppment de tous côtés et le scellement de plaques en silicate de sodium (2), et un profilé creux extérieur (4), dans lequel est insérée la feuille intérieure.
